# EUROPÄISCHE PATENTSCHRIFT

(11) **EP 1 101 399 B1**
(45) Veröffentlichungstag und Bekanntmachung des Hinweises auf die Patenterteilung: **28.05.2003**
(21) Anmeldenummer: 00125111.5
(22) Anmeldetag: 17.11.2000
(51) Int. Cl.: A01G 1/02, A01G 13/02

(54) **Längliche schmale Abdeckung, insbesondere für Spargeldämme**
Elongated narrow covering, particularly for asparagus beds
Couverture allongée et étroite, notamment pour billons d'asperges

(30) Priorität: 17.11.1999 DE 19955462; 10.12.1999 DE 19959852
(43) Veröffentlichungstag der Anmeldung: 23.05.2001
(73) Patentinhaber: EBERT, Reinhard, D-97332 Volkach (DE)
(72) Erfinder: EBERT, Reinhard, D-97332 Volkach (DE)
(74) Vertreter: Pöhner, Wilfried Anton, Dr.

(56) Entgegenhaltungen:
- DE-A- 2 640 015
- DE-A- 19 500 635
- DE-U- 29 609 282
- DE-U- 29 618 448
- US-A- 5 729 929
- PATENT ABSTRACTS OF JAPAN vol. 018, no. 204 (C-1189), 11. April 1994 (1994-04-11) & JP 06 007044 A (ASAHI CHEM IND CO LTD), 18. Januar 1994 (1994-01-18)

## Beschreibung

Die Erfindung bezieht sich auf eine Abdeckung für Spargeldämme mit einer nach Oben/Außen weisenden Oberseite und einer Unterseite, die unmittelbar auf dem Objekt aufliegt und die Abdeckung an ihrer Oberseite auf einem symmetrischen Streifen um die Längsachse ein größeres Reflektionsvermögen für Wärmestrahlung hat als die seitlichen Randbereiche, und diese ein größeres Absorptionsvermögen für Wärmestrahlung haben als der symmetrische Streifen.

Abdeckungen werden dazu verwendet, um beispielsweise Spargeldämme oder Erdbeerbeete zu überdecken und vor Witterungseinflüssen wie Regen, intensive Sonneneinstrahlung oder tiefen Temperaturen zu schützen. Sie weisen zumeist einen rechteckigen Grundriß auf und sind ca. einen Meter breit. Ihre Länge entspricht der Länge des abzudeckenden Objekts. Die Wirkungsweise beruht darauf, daß die abgedeckten Objekte, bei denen es sich üblicherweise um landwirtschaftliche Anpflanzungen handelt, die in langen, parallelen Reihen angebaut werden, den Einflüssen von Regen, Wind und direktem Sonnenlicht entzogen werden. Außerdem kann bei geeigneter Wahl des Materials der Abdeckung erreicht werden, daß die elektromagnetische Strahlung der Sonne praktisch nicht durch das Material der Abdeckung hindurchtritt und zumindest teilweise in ihr absorbiert wird und zur Erwärmung der darunter befindlichen Objekte beiträgt. Zusätzlich kann die Unterseite der Abdeckung, die unmittelbar beispielsweise auf den Spargeldämmen oder einem Beet aufliegt, derart gestaltet sein, daß die vom Untergrund ausgehende Infrarotstrahlung zu einem großen Teil zurückgeworfen wird, und die Anpflanzung z. B. in der Nacht nicht wesentlich auskühlt. Dazu ist die Oberseite der Abdeckung, die nach Oben/Außen weist, mit einem relativ geringen Reflektionsvermögen für Wärmestrahlung ausgestattet, d.h., daß der Anteil der Strahlung, der von der Folie zurückgeworfen wird, geringer ist als der Anteil, der in der Folie absorbiert wird, wobei die Summe aus reflektierter und absorbierter Strahlung der Gesamtmenge der auftreffenden Strahlung entspricht. Bei geeigneter Wahl des Materials der Abdeckung kann der Anteil der Strahlung, der durch sie hindurchtreten kann, praktisch vernachlässigt werden. Hierbei ist ein Unterschied im Reflektionsvermögen mindestens des Faktors 2 notwendig, um signifikante Effekte hervorzurufen. Die langwellige Strahlung gibt ihre Energie an die Abdeckung ab und heizt sie auf. Damit die Abdeckungen beispielsweise auf den Spargeldämmen verbleiben, ist bekannt, sie randseitig auf sich selbst umzufalten und die umgefalteten Abschnitte an der übrigen Abdeckung zu befestigen. In diese randseitigen Taschen kann dann beispielsweise Erdreich eingefüllt werden und als Gewichtsbeschwerung genutzt werden. Derartige Anordnungen sind aus DE 195 00 635 A1 bekannt. Desweiteren ist als nachteilig anzusehen, daß das Füllmaterial in den durch die Umfaltungen entstandenen Taschen entlang der Längsachse der Abdeckung verrutschen kann. Um das zu verhindern werden zwar sog. Querverschweißungen angebracht, die im wesentlichen senkrecht zur Längsachse der Abdeckung in den Taschen angeordnet sind. Dadurch kann die Abdeckung aber beim Aufwickeln, d.h. wenn sie nicht mehr benötigt wird, beschädigt werden, da beim Aufwickelvorgang im Taschenbereich die Luft nicht vollständig entweichen kann und sich daher ein Überdruck ausbildet, der zum Platzen des Abdeckungsmaterials führen kann. Die Querverschweißungen verhindern einen Druckausgleich zur Umgebung bzw. zur benachbarten Tasche.

Auch gibt es Abdeckungen, deren Ränder weiß sind, und die in der Mitte über einen schwarzen Streifen verfügen, um beispielsweise bei Spargeldämmen die aus dem Damm nach oben herausragenden Spargelköpfe vor dem Sonnenlicht zu schützen, wobei hierbei der Nachteil besteht, daß durch den schwarzen Mittelbereich der Abdeckung die Infrarotstrahlung verstärkt absorbiert und ein Spargeldamm im Bereich der Krone unerwünscht aufgeheizt wird, wohingegen die seitlichen Bereiche des Dammes durch die weißen Abschnitte der Abdeckung nicht erwärmt werden.

Die US-PS 5,729,929 offenbart bereits eine Mulchfolie, die aus einem Mittelstreifen mit hohem Reflektionsvermögen und seitlichen Randstreifen besteht, die entweder eine hohe Energieabsorption oder eine hohe Energiedurchlässigkeit gewährleisten. Das Ziel ist die Erzeugung einer Temperaturdifferenz zwischen diesen Bereichen unterschiedlicher Energieaufnahme. Entsprechend dem Charakter der Mulchfolie umgibt diese die in ihrem Wachstum zu fördernde Pflanze, um dabei deren Standort auszusparen.

Ausgehend vom Stand der Technik hat sich die Erfindung zur Aufgabe gestellt, eine Abdeckung derart zu gestalten, daß eine Temperierung des abgedeckten Objekts durch die Reflektion oder Absorption der auftreffenden Infrarotstrahlung in der gewünschten Größenordnung möglich ist, sowie die Folie an ihren seitlichen Rändern mit Gewichtsbeschwerungen versehbar ist, und bei auf sich selbst umgefalteten Randbereichen der Abdeckung zerstörungsfrei aufwickelbar ist.

Erfindungsgemäß wird diese Aufgabe dadurch gelöst, daß die Unterseite der Abdeckung ein niedriges Reflektionsvermögen für Wärmestrahlung besitzt, insbesondere schwarz ist, die Abdeckung an ihren seitlichen Rändern auf sich selbst umgefaltet ist, insbesondere der umgefaltete Abschnitt mit der Abdeckung verbunden ist, der seitliche umgefaltete Rand schwarz und der mittlere Streifen weiß ist.

Zur Verbesserung der Funktionalität der Abdeckung wird vorgeschlagen, daß die Unterseite, die unmittelbar auf dem abzudeckenden Objekt aufliegt, entweder ein niedriges Reflektionsvermögen für Wärmestrahlung besitzt. Dementsprechend kann die Unterseite der Kunststoffolie schwarz eingefärbt sein. Damit ist eine universelle Einsetzbarkeit der Abdeckung auch in unterschiedlichen Klimazonen möglich. In Gebieten mit durchschnittlich tieferen Temperaturen und geringer Intensität der Sonnenstrahlung kann eine Abdeckung mit der schwarzen Unterseite, d.h. geringes Reflektionsvermögen, nach oben aufgelegt werden. Damit wird eine ständige und gleichmäßige Erwärmung durch die Infrarotstrahlen des Tageslichts erhalten. Man wird in Abhängigkeit von den jeweiligen Witterungsverhältnissen die Folie mit der entsprechenden Seite nach oben legen. Die Position "schwarze Seite nach oben" sorgt grundsätzlich für eine bessere Erwärmung des Spargeldammes im Bereich der Seitenwurzel des Dammfußes, als auch der Pflanzenkrone mit der Folge einer Ernteverfrühung und Ertragssteigerung sowie eines wesentlich spurtfreudigeren Wachstums (Turboeffekt). Gerade bei sonnenarmer Witterung wird man deshalb die schwarze Seite der Folie nach oben auflegen, bei hohen Temperaturen hingegen, also bei Schönwetterperioden, wird man hingegen die Spargelfolie umdrehen, so dass im Bereich der Dammkrone zur Qualitätssicherung eine Kühlung erfolgt, jedoch weiterhin im Wurzelbereich also im Bereich des Dammfußes durch die schwarzen Ränder weitgehend eine Erwärmung erhalten bleibt. Durch die Optimierung im Hinblick auf die Witterung erhält man eine Ertragssteigerung die aufgrund vorgenommener Messungen gegenüber den vorbekannten Folien zwischen 17-25% betragen.

Um eine lokale Fixierung und/oder ein Davonwehen in Windböen zu verhindern, wird vorgeschlagen, die Abdeckung an ihren seitlichen Rändern auf sich selbst umzufalten und insbesondere diese umgefalteten Abschnitte mit dem Rest der Abdeckung in geeigneter Weise zu verbinden. Dadurch verfügt die Abdeckung über randseitige taschenartige Hohlräume, die, je nach Ausführung, entweder von der Mitte der Abdeckung oder von den schmalen Stirnseiten offen und zugänglich sind. Derartige Taschen können auch dadurch erzeugt werden, daß zusätzliche, schmale Folienbahnen, insbesondere aus einem dickeren Folienmaterial zur Verbesserung der Haltbarkeit, randseitig an oder auf der Abdeckung befestigt, z. B. festgeklebt oder angeschweißt werden. Diese Taschen sind in einfacher Weise mit Erdreich befüllbar, dessen Gewicht ein Abrutschen oder -gleiten der Folie von dem abzudeckenden Objekt verhindert. Alternativ dazu können auch recyclte Kunststoffe von alten Folien, Kunststoffbauteilen odgl. eingefüllt werden, um die Abdeckung als Ganzes, mit ihren randseitigen Beschwerungen, einer Wiederverwertung zuführen zu können.
Dabei sind die seitlichen Ränder auf die Schönwetterseite, also die Seite mit den weißen mittleren Seiten umzufalten und zu fixieren. Ein Auffüllen der Taschen mit Regenwasser ist dann nur auf der Schönwetterseite möglich, so dass es selten zum Auffüllen der Taschen kommt. Bei schlechtem Wetter hingegen ist die Tasche dem Regenwasser nicht zugänglich. Soweit das Regenwasser eindringt wird es durch Verdunstung wieder in die Atmosphäre abgegeben und steht folglich der Befeuchtung des Wurzelbereiches nicht mehr zur Verfügung. Weiter ist als nachteilig anzusehen, dass die Verdunstungswärme verloren ist und nicht mehr der Erwärmung des Dammfußbereiches dienen kann. Aufgrund des hohen Gewichtes der Folie bei gefüllten Taschen bedeutet es erhebliche Kraftanstrengung die Folienbahnen mit den zum Teil gefüllten Wassertaschen über den Spargeldamm zu ziehen. Andererseits rinnt das sich auf der Folienunterseite ausbildende Kondenzwasser in die Taschenöffnung hinein was zum Vorteil hat, dass einerseits das Abfüllmaterial angefeuchtet und gegen Herausrutschen gesichert wird und andererseits bei Verdunstung durch Schaffung einer feuchtwarmen Atmosphäre ein für das Wachstum des Spargels günstiges Klima geschaffen wird. Das auftreffende Regenwasser rinnt ungehindert über die Folie ab und kann in vorteilhafter Weise im Erdreich versickern und folglich genutzt werden.

Vorteilhafte Ausgestaltungen der Erfindung sind Gegenstand von Unteransprüchen.

In einer sinnvollen Weiterbildung der Erfindung ist die Abdeckung vollständig lichtundurchlässig, d.h. daß der Anteil an elektromagnetischer Strahlung, der durch die Folie hindurchtreten kann, gegenüber der reflektierenden und/oder absorbierten Strahlung vernachlässigbar gering ist. Damit wird erreicht, daß die auftreffende Strahlung entweder reflektiert oder zu einem gewissen Anteil, je nach Beschaffenheit der Oberfläche und/oder Materials der Abdeckung, in ihr absorbiert wird.

Als Material für die Abdeckung wird eine Folie, insbesondere aus Kunststoff, vorgeschlagen. Derartige Folien, beispielsweise aus PVC oder PE, sind dem Fachmann wohl bekannt, leicht zu verarbeiten und können witterungsbeständig, d.h. nicht verrottend ausgelegt sein. Desweiteren zeichnen sich diese Werkstoffe durch einen günstigen Preis und geringes Gewicht aus. Die Herstellung kann in Endlosbahnen erfolgen, die aufgewickelt und vor Ort abgelängt werden. Um die Abdeckung mit einem erfindungsgemäßen Reflektionsvermögen auszustatten, kann die Abdeckung auch aus mehreren, z. B. drei, parallelen Folienbahnen unterschiedlicher Oberfläche oder Farbe zusammengesetzt sein, wobei die benachbarten Folienbahnen zur Befestigung randseitig miteinander verschweißt werden.

Zusätzlich kann die Abdeckung auch undurchlässig oder zumindest teilweise absorbierend für ultraviolette Strahlung ausgelegt sein, um eine Schädigung der Anpflanzungen durch intensive Sonneneinstrahlung zu verhindern.

Bei einer Abdeckung aus Kunststoffolie werden die umgefalteten Abschnitte mit Schweißnähten in der Weise auf der Kunststoffolie fixiert, daß sie entweder parallel oder senkrecht zur Längsachse der Abdeckung verlaufen. Bei Parallelität kann das Füllmaterial in einer einzigen, durchgehenden randseitigen Tasche eingefüllt werden. Bei einer Orientierung quer zur Längsachse ist der umgefaltete Teil der Abdeckung in viele randseitige Taschen unterteilt. Insbesondere wird vorgeschlagen, daß die Schweißnähte unterbrochen, d. h. nicht durchgehend ausgeführt sind. Bei einer Orientierung quer zur Längsrichtung wird erreicht, daß Luft an diesen Unterbrechungsstellen von einer Tasche in die benachbarte strömen kann. Damit wird verhindert, daß beim Aufwickeln die Abdeckung, durch den entstehenden Überdruck der nicht aus den Taschen entweichenden Luft platzt. Das gleiche Ergebnis wird erhalten, wenn mehrere voneinander beabstandete, parallel zu Längsachse orientierte Schweißnähte zwei Taschen voneinander abtrennen. Deren Abstand wird so gewählt, dass die Luft dann zwischen den parallelen Schweißnähten hindurchströmen kann, das relativ grobkörnige Füllgut aber zurückgehalten wird. Prinzipiell können die Schweißnähte jedoch auch in jeder anderen Richtung zur Längsachse der Abdeckung orientiert sein.

Bei einer Umfaltung des Randbereichs einer Abdeckung mit unterschiedlichen Reflektionsvermögen auf der Ober- und der Unterseite wird dadurch das Reflektionsvermögen der Abdeckung in diesem Abschnitt verändert. Zur Lösung dieses Problems wird vorgeschlagen, daß der umzufaltende Abschnitt entweder nachträglich oder bereits bei der Produktion mit einem entsprechenden Reflektionsvermögen ausgestattet wird, z. B. unterschiedlich eingefärbt, um nach der Umfaltung den gleichen Reflektionsgrad zu haben, wie der Bereich der Abdeckung, auf den er umgefaltet wird.

Um ein unbeabsichtigtes Entleeren der randseitigen Taschen und/oder das Eindringen von Regenwasser zu verhindern, wird vorgeschlagen, daß der auf sich selbst umgefaltete Teil der Abdeckung ein zweites Mal parallel zur Längsachse umgefaltet wird. Auch hier kann eine Fixierung dieser zweiten Umfaltung in vorbeschriebener Weise erfolgen. Damit wird erreicht, daß das einmal eingefüllte Material zur Beschwerung der Abdeckung an Ort und Stelle verbleibt. Auch hier kann die nach Oben/Außen weisende Oberseite der Umfaltung geeignet eingefärbt werden.

Eine sinnvolle Weiterbildung der Erfindung besteht darin, daß die Abdeckung zweischichtig, beispielsweise aus zwei Kunststoffolien, ausgeführt ist. Dadurch wird u.a. die Stabilität und/oder Reißfestigkeit der Abdeckung erhöht, sowie ein Eindringen von Wasser in die seitlichen Taschen der unterseitigen Folie verhindert. Die Folien können an ihren jeweiligen nach Außen weisenden Oberflächen auch mit unterschiedlichen Reflektionsvermögen ausgestattet bzw. unterschiedlich eingefärbt sein. Auch kann die Abdeckung einen drei- oder mehrschichtigen Aufbau aufweisen, um z. B. wie bei bisher bekannten Abdeckungen eine erste transparente Folie zur Erzeugungeines Treibhauseffekts auf zwei weiteren, auch unterschiedlich eingefärbten, Folien zu befestigen. Bei einem dreischichtigen Aufbau kann die erste, oberste Folie transparent und darunter eine zweite, schwarze Folie befestigt, z. B. angeklebt sein. Die erste Folie führt zu einem Treibhauseffekt, da die vom Erdreich oder der schwarzen Folie nach oben/außen strahlende Infrarotstrahlung an ihr wieder zurückgeworfen wird. Gleichzeitig dient die äußerste Folie der thermischen Isolation und verhindert die Abgabe der in der schwarzen Folie durch Absorption erzeugten Wärme nach außen. Die dritte an der schwarzen befestigten Folie ist weiß, um nach einem Umdrehen der Abdeckung das Sonnenlicht zu reflektieren, d.h. das abzudeckende Objekt nicht zusätzlich aufzuheizen.

Alternativ zum Einfüllen von Erdreich in Taschen kann eine Beschwerung der Abdeckung mit Schläuchen erfolgen, die randseitig, parallel zur Längsachse der Abdeckung befestigt sind. Die Schläuche sind entweder in den randseitigen Taschen eingelegt oder mit geeigneten Hilfsmitteln am Rand der Abdeckung befestigt. Zur Beschwerung werden die Schläuche mit Wasser gefüllt.

Um eine an ihrer Oberfläche strukturierte Abdeckung zu erhalten, wird vorgeschlagen, daß sie mit einer Prägung versehen wird. Dabei kann entweder die gesamte Folie oder nur bestimmte Abschnitte der Folie geprägt sein. Die Prägung wird entweder nachträglich durch den Druck eines zweiteiligen, formgebenden Werkzeugs, einem Gesenk, in einer mechanischen oder hydraulischen Presse an der Abdeckung, vorzugsweise einer Kunststoffolie, angebracht. Sie kann aber auch bereits bei der Herstellung in einem bekannten Spritzprägeverfahren einer formbaren Kunststoffmasse erstellt werden. Die Prägung kann an Ober- und Unterseite der Abdeckung das gleiche oder unterschiedliche Muster aufweisen, wobei sich die absolute Dicke der Abdeckung, d.h. der Abstand zwischen den erhabenen Bereichen an Ober- und Unterseite, durch die Prägung ändern kann.

Als Prägemuster werden drei- oder vierseitige Pyramiden oder Kegel vorgeschlagen, die im wesentlichen gleichmäßig verteilt auf dem geprägten Abschnitt angeordnet sind. Sind sie im symmetrischen Streifen, der die Krone eines Spargeldamms abdeckt, angebracht, reflektieren ihre schräg gestellten Seitenflächen das zur Mittagszeit im wesentlichen senkrecht von oben einfallende Sonnenlicht, um ein zu starkes Aufheizen der Dammkrone durch Absorption der intensiven Sonneneinstrahlung zu vermeiden. In den kühlen Morgen- und Abendstunden jedoch, wenn die Sonne knapp über den Horizont steht, trifft ihr Licht auf die ungefähr senkrecht dazu ausgerichteten Seitenflächen der Pyramiden und Kegel, und die größtmögliche Strahlungsenergie kann aufgenommen werden.

Dazu kann die Prägung entweder nur am symmetrischen Streifen in der Mitte der Abdeckung oder nur an den seitlichen Bereichen, die die schrägen Flanken des Spargeldammes überdecken, angebracht sein. Die Prägung des symmetrischen Streifens bietet die oben beschriebenen Vorteile, und die schrägen Seitenflächen auf den Flanken des Dammes reflektieren das senkrecht von oben einfallende Licht aufgrund des Einfallswinkels, sodaß hier nicht unbedingt eine Prägung angebracht sein muß.

Prinzipiell können der symmetrische Streifen und die seitlichen Abschnitte auch mit jeweils unterschiedlichen Prägungen ausgestattet sein. Je nach Steilheit der Flanke des Dammes können an den seitlichen Abschnitten Pyramiden oder Kegel mit anderen Neigungswinkeln als am symmetrischen Streifen eingeprägt sein, um jeweils optimale Auftreffwinkel für das Sonnenlicht in den Früh- und Mittagsstunden zu erhalten. Auch können sich die Prägemuster hinsichtlich der Ausformung und der Dichte, d.h. der Anzahl der Pyramiden oder Kegel je Fläche, unterscheiden.

Besonders wird die Verwendung einer erfindungsgemäßen Abdeckung bei Spargeldämmen vorgeschlagen. Dabei wird die Abdeckung derart auf den abzudeckenden Damm aufgelegt, daß der mittlere Streifen der Oberseite mit dem großen Reflektionsvermögen, der nach Oben/Außen weist, im wesentlichen die horizontale Krone des Dammes überdeckt. Die schrägen Seitenflächen des Dammes werden von den Randbereichen der Folie, die ein geringeres Reflektionsvermögen aufweisen, abgedeckt. Evtl. werden auch bei entsprechender Breite der Abdeckung die beiderseitig angrenzenden Dammfurchen zumindest teilweise überdeckt. Da die Erstellung von Spargeldämmen maschinell in vorgegebenen Breiten und Höhen erfolgt, kann eine entsprechend dimensionierte Abdeckung, beispielsweise eine Kunststoffolie, in der zugehörigen Größe angefertigt werden. Mit der erfindungsgemäßen Abdeckung wird erreicht, daß die seitlichen Bereiche des Spargeldamms durch die Absorption des Sonnenlichts in der Abdeckung erwärmt, der Bereich der Dammkrone aber durch die Reflektion gekühlt wird. Dadurch wird erreicht, daß die Spargelspitzen unmittelbar unter der Erdoberfläche nur langsam wachsen und nicht, wie bei bisher bekannten Abdeckungen, durch die allseitige Erwärmung unkontrolliert "ausschießen" und den Damm nach oben durchbrechen. Mit der im Bereich der Krone geringeren Aufheizung wird auch das sogenannte "Kochen" und/oder das Aufblühen der Spargelspitzen unterbunden und eine optimale Temperierung des Spargeldamms erreicht. An kühlen Tagen kann der Damm durch das Nachobenlegen der vollständig schwarzen Unterseite der Folie erwärmt und an heißen Tagen durch Umdrehen der Folie die Dammkrone mit dem weißen Mittelteil der Folie gekühlt werden, wobei gleichzeitig die schwarzen Randbereiche der Folie den Dammfuß weiterhin erwärmen.

Weitere Einzelheiten, Merkmale und Vorteile der Erfindung lassen sich dem nachfolgenden Beschreibungsteil entnehmen, in dem anhand dreier Zeichnungen Ausführungsbeispiele der Erfindung näher dargestellt sind. Es zeigen:
- **Figur 1**: eine Abdeckung mit einer schwarzen Unterseite,
- **Figur 2**: eine Abdeckung mit einer weißen Unterseite,
- **Figur 3**: die randseitige Umfaltung einer Abdeckung.

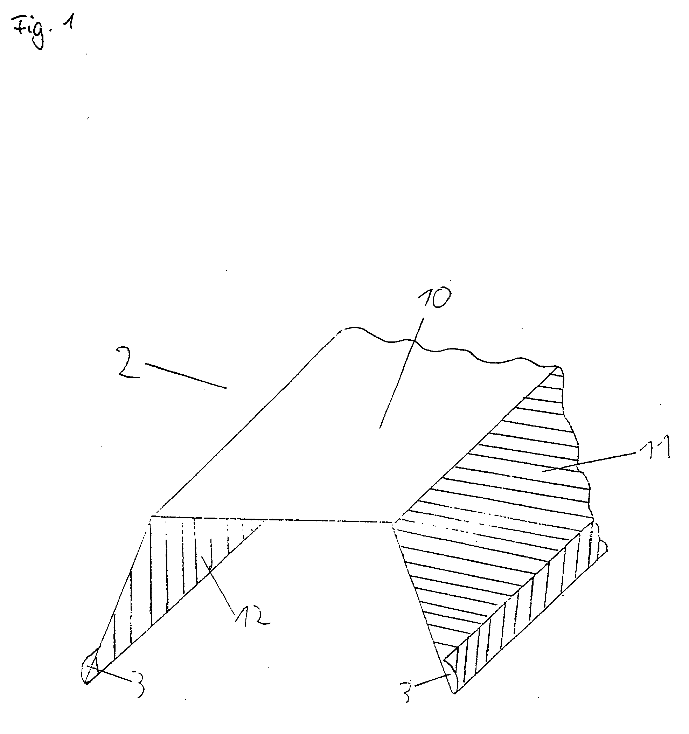

Bei dem in Figur 1 dargestellten Ausführungsbeispiel der Erfindung handelt es sich um eine Abdeckung (2), die z. B. aus einer Kunststoffolie besteht, wobei die nach Oben/Außen weisende Oberseite der Abdeckung derart ausgestaltet ist, daß auf einem symmetrischen Streifen (10) mittig zur Längsachse der Abdeckung (2) das Reflektionsvermögen für Wärmestrahlung größer ist als in den beiden seitlichen Randbereichen (11), idealerweise mindestens um den Faktor 2. Dies wird bei einer Kunststoffolie mit einer Weißfärbung in der Mitte (10) und einer Schwarzfärbung am Rand (11) erreicht. Die Unterseite (12) der Abdeckung (2) ist hier vollständig schwarz ausgeführt. Demzufolge ist eine Umfärbung der nach Außen weisenden Oberflächen der umgefalteten Abschnitte, die die Taschen (3) bilden, hier nicht notwendig, da beide Seiten der Folie randseitig die gleiche Färbung aufweisen. Im Mittelbereich (10) der Abdeckung (2), die auf der horizontalen Krone des Spargeldamms aufliegt, wird das auftreffende Licht stärker reflektiert als an den schrägen Seitenflächen (11), an denen es in die Folie eindringen und die Strahlungsenergie an sie abgeben und indirekt das Erdreich erwärmen kann. Damit wird eine zu große Aufheizung der Krone verhindert und das unkontrollierte Wachstum der Spargelspitzen und/oder das Aufblühen unterbunden, um beispielsweise täglich im wesentlichen gleich große Spargel ernten zu können.

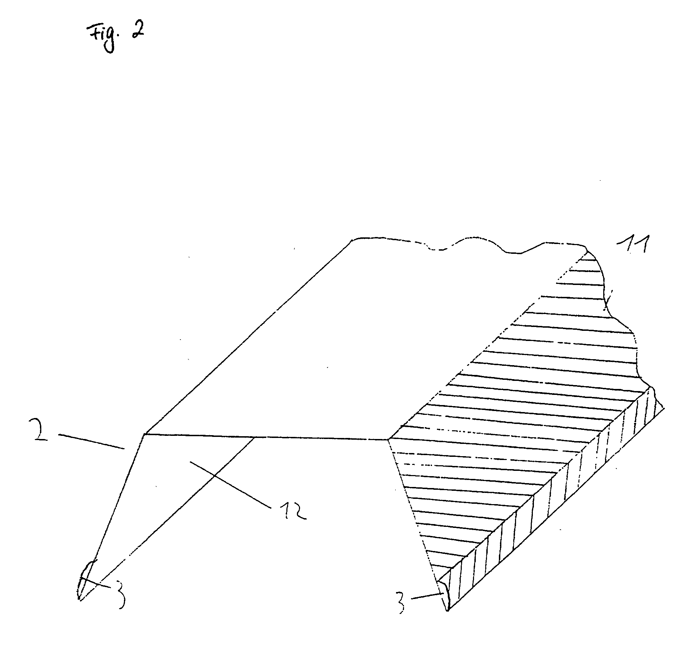

Die in Figur 2 dargestellte Abdeckung (2) verfügt über eine vollständig weiße Unterseite (12). In heißen und trockenen Gebieten kann diese Abdeckung (2), wenn die zusätzliche Aufheizung der seitlichen Bereiche des Spargeldamms durch die schwarzgefärbten Abschnitte (11) der Abdeckung (2) unerwünscht ist, entlang ihrer Längsachse umgedreht werden und weist dann mit der vollständig weißen bzw. stark reflektierenden Seite (12) nach Außen, um die Temperatur im Damminneren zur Anpassung an die optimalen Bedingungen zu regulieren. Die Taschen (3), die durch das Umfalten der randseitig anders gefärbten Abdeckung (2) entstehen, können z. B. mit Erdreich (7) gefüllt werden, oder ein wassergefüllter Schlauch wird parallel zur Längsachse der Abdeckung (2) eingelegt, um sie zu beschweren und an oder auf einem Spargeldamm zu fixieren.

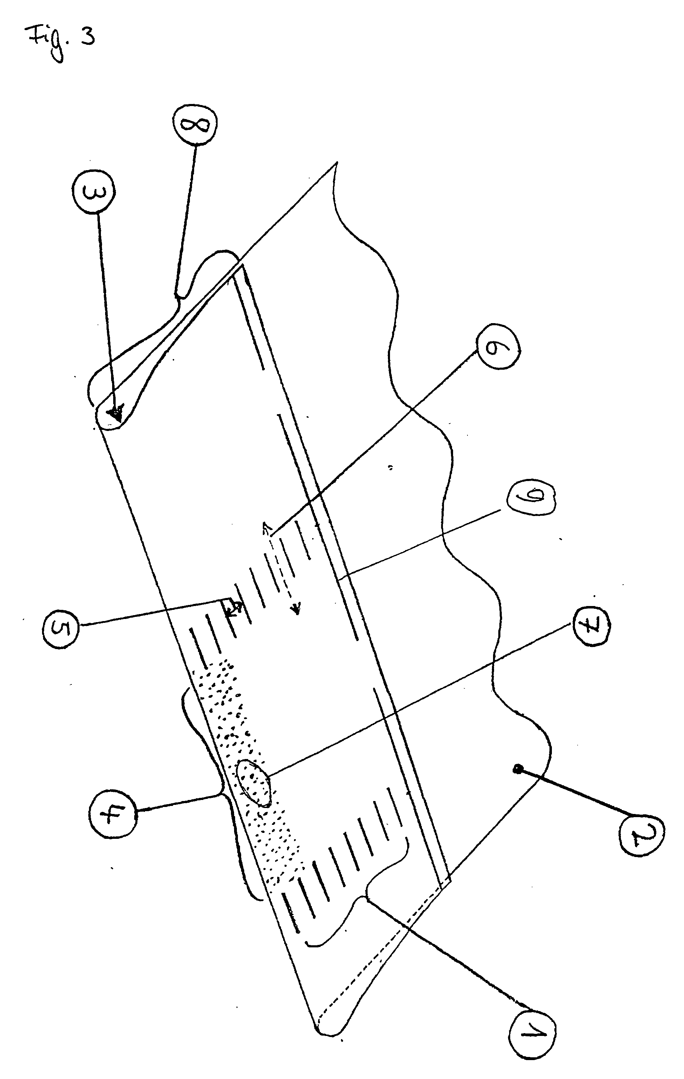

In Figur 3 ist eine randseitige Umfaltung der Abdeckung (2) dargestellt. Sie ist mit parallel zur Längsachse verlaufenden Schweißnähten (1) an der Abdeckung (2) fixiert. Dabei sind die Schweißnähte (1) unterbrochen ausgeführt, d.h. sie verlaufen nicht durchgehend über die gesamte Länge der Abdeckung (2). Dadurch werden mehrere randseitige Taschen (3) gleicher Breite (4) und Höhe (8) am Rand der Abdeckung (2) geschaffen. Hier sind mehrere parallele Schweißnähte (1) beabstandet zueinander (5) derart angeordnet, daß sie einen Austausch von Luft parallel ihrer Richtung, zwischen benachbarten Taschen (3), erlauben, wie durch den Pfeil (6) angedeutet. Die Taschen (3) sind an ihrer der Folienmitte zugewandten Seite mit einer ebenfalls unterbrochen ausgeführten Schweißnaht (9) zumindest teilweise verschlossen. Das meist relativ grobkörnige Füllgut (7) kann praktisch nicht zwischen den parallelen Schweißnähten (1) von einer Tasche (3) in die andere überwechseln, allerdings ist ein Druckausgleich beim Aufwickeln der Abdeckung (2) möglich.

## Patentansprüche

1. Abdeckung für Spargeldämme mit einer nach Oben/Außen weisenden Oberseite und einer Unterseite, die unmittelbar auf dem Objekt aufliegt und die Abdeckung (2) an ihrer Oberseite auf einem symmetrischen Streifen (10) um die Längsachse ein größeres Reflektionsvermögen für Wärmestrahlung hat als die seitlichen Randbereiche (11), und diese ein größeres Absorptionsvermögen für Wärmestrahlung haben als der symmetrische Streifen (10),
**dadurch gekennzeichnet, daß**
- die Unterseite (12) der Abdeckung (2) ein niedriges Reflektionsvermögen für Wärmestrahlung besitzt, insbesondere schwarz ist,
- die Abdeckung (2) an ihren seitlichen Rändern auf sich selbst umgefaltet ist, insbesondere der umgefaltete Abschnitt mit der Abdeckung (2) verbunden ist,
- der seitliche umgefaltete Rand schwarz und der mittlere Streifen weiß ist.

2. Abdeckung nach Anspruch 1, **dadurch gekennzeichnet, daß** die Abdeckung (2) lichtundurchlässig ist.

3. Abdeckung nach Anspruch 1, **dadurch gekennzeichnet, daß** die Abdeckung (2) eine Folie ist, insbesondere aus Kunststoff, und/oder die Abdeckung (2) aus Folienbahnen zusammengesetzt ist.

4. Abdeckung nach einem der vorhergehenden Ansprüche, **dadurch gekennzeichnet, daß** die Abdeckung (2) zumindest teilweise absorbierend oder undurchlässig für ultraviolette Strahlung ist.

5. Abdeckung nach einem der vorhergehenden Ansprüche, **dadurch gekennzeichnet, daß** der umgefaltete Abschnitt mit Schweißnähten (1) auf der Kunststoffolie fixiert ist, insbesondere die Schweißnähte (1) parallel und/oder quer zur Längsrichtung der Folie verlaufen und/oder sie abschnittsweise unterbrochen ausgeführt sind.

6. Abdeckung nach einem der vorhergehenden Ansprüche, **dadurch gekennzeichnet, daß** die Abdeckung (2) an der nach oben/außen weisenden Seite des umgefalteten Abschnitts das gleiche Reflektionsvermögen aufweist wie der Bereich der Abdeckung (2), auf den er umgefaltet ist.

7. Abdeckung nach einem der vorhergehenden Ansprüche, **dadurch gekennzeichnet, daß** die Abdeckung (2) im seitlichen Randbereich zweimal umgefaltet ist.

8. Abdeckung nach einem der vorhergehenden Ansprüche, **dadurch gekennzeichnet, daß** die Abdeckung (2) mehrschichtig ist, insbesondere sie aus zwei oder mehreren Kunststoffolien besteht.

9. Abdeckung nach einem der vorhergehenden Ansprüche, **dadurch gekennzeichnet, daß** ein wassergefüllter Schlauch seitlich an der Abdeckung (2) befestigt ist.

10. Abdeckung nach einem der vorhergehenden Ansprüche, **dadurch gekennzeichnet, daß** die Abdeckung (2) zumindest abschnittsweise mit einer Prägung versehen ist.

11. Abdeckung nach einem der vorhergehenden Ansprüche, **dadurch gekennzeichnet, daß** die Prägung von im wesentlichen gleichmäßig und aquidistant voneinander beabstandeten Pyramiden und/oder Kegeln gebildet ist.

12. Abdeckung nach einem der vorhergehenden Ansprüche, **dadurch gekennzeichnet, daß** nur der symmetrische Streifen (10), der auf der horizontalen Krone eines Spargeldamms aufliegt, oder nur die seitlichen Streifen (11) die auf den schrägen Flanken eines Spargeldamms aufliegen, mit einer Prägung versehen sind.

13. Abdeckung nach einem der vorhergehenden Ansprüche, **dadurch gekennzeichnet, daß** der symmetrische Streifen (10) und die seitlichen Streifen (11) eine unterschiedliche Prägung aufweisen.

14. Verwendung einer Abdeckung nach einem der vorhergehenden Ansprüche, **dadurch gekennzeichnet, daß**
- ein Spargeldamm damit abgedeckt wird, wobei
- der Bereiche (10) mit dem größeren Reflektionsvermögen an der Oberseite im wesentlichen die horizontale Krone des Dammes abgedeckt,
- die seitlichen Bereiche (11) mit dem geringeren Reflektionsvermögen im wesentlichen die schrägen Seitenflächen des Dammes abdecken.

15. Verwendung einer Abdeckung nach einem der vorhergehenden Ansprüche, **dadurch gekennzeichnet, daß** in Abhängigkeit von der Witterung unterschiedliche Seiten der Abdeckung (12) Einsatz finden dergestalt, dass
- an heißen Tagen die Abdeckung mit dem symmetrischen Streifen nach oben zu auf die Dammkrone aufgelegt und
- an kühlen Tagen die Unterseite (12) der Abdeckung (2) nach oben zu auf den Damm aufgelegt wird.

## Claims

1. Cover for raised asparagus beds, comprising an upwardly/outwardly facing top side and an underside which lies directly on the object and the cover (2) has on its top side, on a symmetrical strip (10) about the longitudinal axis, a greater reflection capacity for thermal radiation than the lateral edge regions (11), and the latter have a greater absorption capacity than the symmetrical strip (10),
**characterised in that**
- the underside (12) of the cover (2) has a low reflection capacity for thermal radiation, in particular it is black,
- the cover (2) is folded over on itself at its lateral edges, in particular the folded-over section is joined to the cover (2),
- the lateral folded edge is black and the centre strip is white.

2. Cover according to claim 1, **characterised in that** the cover (2) is light impermeable.

3. Cover according to claim 1, **characterised in that** the cover (2) is a sheet, in particular of plastic, and/or the cover (2) comprises sheet webs.

4. Cover according to one of the preceding claims, **characterised in that** the cover (2) is at least partly absorbent or impermeable to ultraviolet radiation.

5. Cover according to one of the preceding claims, **characterised in that** the folded-over section is fixed by means of weld seams (1) on the plastic sheet, in particular the weld seams (1) extend parallel and/or transversely to the longitudinal direction of the sheet and/or they are interrupted in sections.

6. Cover according to one of the preceding claims, **characterised in that** the cover (2) has the same reflection capacity on the upwardly/outwardly facing side of the folded-over sections as that region of the cover (2) onto which it is folded over.

7. Cover according to one of the preceding claims, **characterised in that** the cover (2) is folded over twice in the lateral edge region.

8. Cover according to one of the preceding claims, **characterised in that** the cover (2) is multilayered, in particular it consists of two or more plastic films.

9. Cover according to one of the preceding claims, **characterised in that** a water-filled flexible tube is attached laterally on the cover (2).

10. Cover according to one of the preceding claims, **characterised in that** the cover (2) is provided with an embossing at least in sections.

11. Cover according to one of the preceding claims, **characterised in that** the embossing is formed of pyramids and/or cones spaced essentially uniformly and equidistantly from one another.

12. Cover according to one of the preceding claims, **characterised in that** only the symmetrical strip (10), which lies on the horizontal crown of a raised asparagus bed, or only the lateral strips (11), which lie on the oblique flanks of a raised asparagus bed are provided with an embossing.

13. Cover according to one of the preceding claims, **characterised in that** the symmetrical strip (10) and the lateral strips (11) have different embossing.

14. Use of a cover according to one of the preceding claims, **characterised in that**
- a raised asparagus bed is covered therewith,
- the regions (10) having the greater reflection capacity on the topside essentially covering the horizontal crown of the raised bed,
- the lateral regions (11) with the lower reflection capacity essentially covering the oblique lateral faces of the raised bed.

15. Use of a cover according to one of the preceding claims, **characterised in that,** different sides of the cover (12) are used depending on the weathering, such that
- on hot days the covering is laid with the symmetrical strip facing upwards on the insulating crown, and
- on cold days the underside (12) of the cover (2) is laid facing upwards on the raised bed.

## Revendications

1. Bâche de protection pour buttes d'asperges, composée d'une face supérieure dirigée vers le haut et d'une face inférieure reposant directement sur l'objet, la face supérieure de la bâche étant pourvue d'une bande symétrique (10) par rapport à l'axe longitudinal, réfléchissant plus la chaleur que les bandes latérales (11), ces bandes latérales absorbant mieux la chaleur que la bande symétrique (10), **caractérisée en ce que**
- la face inférieure (12) de la bâche (2) réfléchit moins la chaleur et est noire,
- les bandes latérales de la bâche (2) sont repliées sur elles-mêmes, la partie retournée étant notamment reliée à la bâche (2),
- le bord replié est noir et la bande centrale est blanche.

2. Bâche de protection selon la revendication 1, **caractérisée en ce que** la bâche (2) est opaque.

3. Bâche de protection selon la revendication 1, **caractérisée en ce que** la bâche (2) est une feuille, notamment de plastique, et/ou est composée de plusieurs bandes.

4. Bâche de protection selon l'une des revendications précédentes, **caractérisée en ce que** la bâche (2) est absorbante ou imperméable à la lumière ultraviolette, du moins en partie.

5. Bâche de protection selon l'une des revendications précédentes, **caractérisée en ce que** la partie repliée est fixée sur la feuille de plastique par des soudures (1), ces soudures (1) étant notamment parallèles et/ou perpendiculaires à l'axe longitudinal de la feuille et/ou étant interrompues par endroits.

6. Bâche de protection selon l'une des revendications précédentes, **caractérisée en ce que** la face tournée vers le haut / vers l'extérieur de la partie repliée de bâche (2) a le même pouvoir de réflexion que la partie de la bâche (2) sur laquelle elle est repliée.

7. Bâche de protection selon l'une des revendications précédentes, **caractérisée en ce que** la bande latérale de la bâche (2) est repliée deux fois.

8. Bâche de protection selon l'une des revendications précédentes, **caractérisée en ce que** la bâche (2) est une feuille multi-couche, notamment composée de deux ou de plusieurs couches.

9. Bâche de protection selon l'une des revendications précédentes, **caractérisée en ce que** l'on fixe un tuyau rempli d'eau sur les bords de la bâche (2).

10. Bâche de protection selon l'une des revendications précédentes, **caractérisée en ce que** la bâche (2) est gaufrée, du moins par endroits.

11. Bâche de protection selon l'une des revendications précédentes, **caractérisée en ce que** le gaufrage se présente sous forme de pyramides et/ou de cônes équidistants à intervalles approximativement réguliers.

12. Bâche de protection selon l'une des revendications précédentes, **caractérisée en ce que** seule la bande symétrique (10) reposant sur la crête de la butte d'asperges, ou seules les bandes latérales (11) reposant sur les flancs de la butte d'asperges, sont gaufrées.

13. Bâche de protection selon l'une des revendications précédentes, **caractérisée en ce que** la bande symétrique (10) et les bandes latérales (10) présentent un gaufrage différent.

14. Utilisation d'une bâche de protection selon l'une des revendications précédentes, **caractérisée en ce que**
- la bâche sert à protéger une butte d'asperges,
- la partie (10) à plus fort pouvoir de réflexion sur le dessus recouvre la majeure partie de la crête horizontale de la butte,
- les parties latérales (11) à plus faible pouvoir de réflexion recouvrent la majeure partie des pans obliques de la butte.

15. Utilisation d'une bâche de protection selon l'une des revendications précédentes, **caractérisée en ce que** l'on tourne la bâche (2) sur une face ou sur l'autre suivant les conditions météorologiques, c.-à-d. que
- lorsqu'il fait chaud, on pose la feuille de sorte que la bande symétrique soit à l'extérieur, sur la crête de la butte, et
- lorsqu'il fait plus frais, on retourne la feuille de sorte que la face inférieure (12) soit à l'extérieur, sur la crête de la butte.
